# EUROPEAN PATENT APPLICATION

(11) **EP 3 403 494 A1**
(43) Date of publication of application: **21.11.2018**
(21) Application number: 18020113.9
(22) Date of filing: 26.03.2018
(51) Int. Cl.: A01K 63/04, B01F 13/00, B01F 15/00, B01F 3/04, C02F 7/00, A01K 61/60

(54) **MODULAR DEVICE FOR MAINTENANCE OF WATER QUALITY**

(30) Priority: 15.05.2017 HR P20170715
(71) Applicant: EMPAD-CTS doo, 10020 Zagreb (HR)
(72) Inventor: EMPAD-CTS doo, 10020 Zagreb (HR)

(57) **Abstract**

Modular device for maintenance of water quality comprises photovoltaic modules (1) mounted on the chassis (2), battery supply system with control of charging and discharging, power supplies and control units (3) installed on chassis, buoys (4) located on the underside of the chassis, electric drive pump (5) attached to the supporting structures and connected with battery supply system and control units (3) which may be connected with the aerator (6) and the floating particle filter (7) which may or may not be connected to the device, depending on the desired function and suction basket (8) which is placed on the targeted water intake site, depending on the desired function and purpose according to the user's decision.

## Description

### Title of the Invention

Modular device for maintenance of water quality

### Field of the Invention

The invention relates to an autonomous device for water exchange and oxygen enrichment of water which is used in the breeding cages with organisms (aquaculture and / or mariculture), and in water bodies with poor quality of the water. The invention is driven by the photovoltaic panels and contains batteries.

### Background of the Invention

Cage farming is dependent primarily on the capacity of the environment to ensure water quality and the ability of environment for the reception of issued matter and energy. Large amounts of food in the intensive production lead to increased emissions of nutrients in the environment which consequently induces increased production of organic matter and changes in the physico-chemical parameters: reduced amount of dissolved oxygen, increased amount of carbon dioxide and reduced water flow through the cages which increases the likelihood of disease outbreaks in livestock. Therefore, since the inflow of fresh, oxygen-rich water is one of the major limiting factors in mariculture, introduction of large quantity of dissolved oxygen in the water would enable faster growth of fish, reduction of disease and faster decomposition of organic matter in the water column which reduces the negative impact on the environment. The purpose of the invention is to obtain an autonomous modular device for maintaining the quality of water, adaptable to user requirements and water bodies / cages. The device itself can have several functions: 1) pumping fresh water from a remote location; 2) ejecting cloudy water of poor quality; 3) aeration of water with the help of aerators; 4) water filtration with floating filter. Direction of pumping water and the area from which the water is pumped in / pumped out can be adjusted to the needs of users. Furthermore, the purpose of the invention is to provide a device that is adaptive, functional, economical and compact, and can be used safely for users and the environment.

### Brief Description of the Prior Art

Present commercially available devices are based on the two following principles: (1) devices that mechanically break the surface tension of water to cause mixing and (2) devices that inject and disperse air bubbles under water. Devices that mechanically break the surface tension of water (either by disturbing the surface or by spraying on the water surface, for example, patent No. US 3612489 A or Sager HP Paddel Wheel Aerator) have an effect localized on the surface, thus losing a large amount of kinetic energy, with low oxygen transfer efficiency. Existing devices which spray air bubbles at a certain depth use large amounts of electricity to transfer air at great depth, since the pump must overcome the hydrostatic pressure of water. Devices operating below the surface have more efficient transfer of oxygen, but act rather locally. In addition, air pumps generate air bubbles in the water that can have a negative impact on the ecosystem and cause injuries to smaller water organisms.

Instead of air, water can be pumped into the deeper layers of water which is used in devices for mixing layers in larger water bodies using propeller (eg. Pat. US 8651766B2). However, such principle is not applicable technological solution for aquaculture since the propeller can cause mechanical injuries to breeding organisms. Some devices for aeration power the pumps with photovoltaic panels and batteries located on the coast (eg. Patent No. US 6676837B2, US20170072372) or located on the floating structure (US 4906359), but breeding cages are most commonly off the coast and without access to public electricity network.

### Summary of the Invention

The purpose of the invention is to obtain a modular device for maintaining the quality of water, which is autonomous, adaptable to user requirements and various water bodies, energy efficient and has a positive effect on the environment.

### Technical Problem to be Solved

The higher efficiency: invested energy / increased amount of oxygen in a given environment / reduced amount of organic material in water. The device accelerates natural processes in water: water circulation, dissolving gases in water (aeration), removing excess organic matter / nutrients (filtration). The device performs water exchange between the environment loaded with larger amount of organic matter and uncontaminated environment (immediate and distant surrounding).

### Brief Description of the Drawings

The accompanying drawings included in the description constitute a descriptive part of the invention, illustrate the best way of presenting the invention and are intended to explain the basic principles of the invention.
Fig. 1 is a schematic drawing of a device

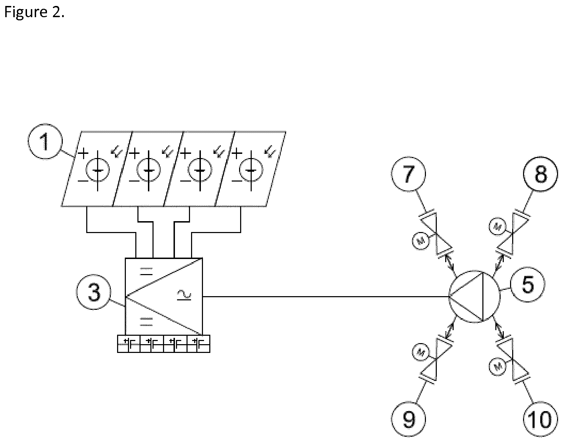

Fig. 2 is a principal drawing of the device

### Detailed Description of the Invention

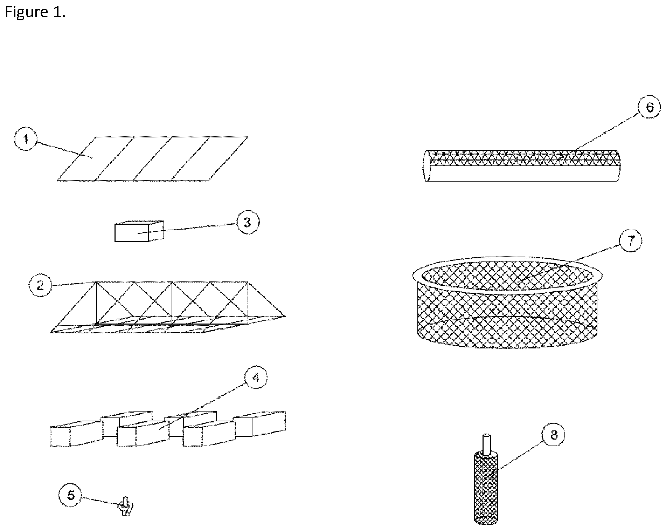

Referring to Figure 1, it can be seen that the device consists of photovoltaic modules (1) which are powered by battery supply system with control of charging and discharging (3) which is embedded in a chassis (2). Buoys (4) which give buoyancy to chassis, can be an integral part of the chassis. Energy from the batteries can optionally operate the electric drive pump (5) which serves to circulate the water within the breeding cage, and / or between the cage and the environment. The pump is built primarily for the transmission of large volume, not to create pressure. Aeration is carried out in the aerator (6), a chamber incorporated in the device, where the maximum amount of dissolved oxygen in the water is achieved, with the minimum of air bubbles created in the cage. Energy equipment, control units and batteries are housed in a tank attached to the chassis beneath the photovoltaic modules. Water filtration is performed by floating particle filter (7). Suction basket (8) is an inlet water filter that prevents suction of larger structures and animals into the pump.

The modularity of the device is evident in the fact that with only one power base - a photovoltaic system (1), a battery (3) and a single electric drive pump (5) has several different operational modes. In short these modes are:
1. Pumping fresh water into the cage (from smaller or greater distance into the cage)
2. Pumping water out of the cage into surrounding area
3. Aeration of water into the cage (or within a limited water surface) by means of an aerator (6)
4. Water filtration through floating particle filter (7) and return of purified and aerated water back into the cage
5. Pumping fresh and aerated water using aerators (6)
6. Adjusting temperature zones in the cages by means of vertical water flow
7. Cooling the surface layer in the cages by pumping cooler water from greater depth.

Modules can be changed not only during one season, but also within few days, so that device can easily adapt to changes in the environment. Shifts can be made manually or automatically depending on the device's equipment and the frequency of changes among various modes of operation.

### Example 1: Industrial Application of the Invention

With the growing global need for the production of healthy food and a simultaneous reduction in fishing catches of commercial marine species, mariculture has become one of the fastest growing sectors in the world. In 2013, the European Union declared mariculture as one of the strategic sectors for growth, development and employment. In view of the great potential for the development of aquaculture as a promising agro-food industry, this device represents an innovative technological solution that will contribute to the development of mariculture in the international market. The device is easy to install, with no negative impact on the breeding organisms or the environment, presents sustainable solution when natural conditions are not adequate and consequently reduces losses of potential income. Installing this device would allow placing cages in bays with reduced water flow and combining among modules to achieve optimal conditions in the breeding farms. Since current devices on the market are not fully applicable to larger plants or require excessive financial investment, the installation of this device is in the interest of all aquaculture growers who want to improve their production, increase the growth of organisms and maintain health in cages while reducing negative environmental impact of cages. The device is most efficient for use in fish farms, as they require large amount of oxygen due to intense growth, and have periods of intensive feeding when greater amount of food is introduced into water and needs to be decomposed. In addition to mariculture, the device can be used in freshwater bodies (lakes, ponds) in the aquaculture sector and for the purpose of purification and filtration of water in case of poor water quality. It will be clear to experts that device has an extremely modular character which enables a number of applications and functions, as well as changes in the size of the invention, without departing from the scope and core of the invention.

### Description of drawings - List of used reference signs

### Signs 1-8 describe parts of the device

1. photovoltaic modules, possible sizing from several hundred W to several MWs;
2. the supporting structure / chassis can be made as metallic or artificial material, dimensioned according to the required quantity of photovoltaic modules;
3. battery supply system with control of charging and discharging, power supplies and control units;
4. buoys,may also be an integral part of chassis;
5. electric drive pump, possible installation of several pumps, selected voltage and power depend on available energy from photovoltaic modules and desired water flow rate;
6. Aerator may perform aeration before returning water to the cage, aerator can have a separate electromotor drive;
7. Floating particle filter;
8. Suction basket prevents suction of larger animals into the pump and protects the pump from penetrating solid particles;

### Signs 9-10 describe function / environment around device

9. breeding cages, place of entry or exit of water;
10 surrounding water, place of entry or exit of water, may be on the surface, or within the water column, in the deeper thermocline layer

## Claims

1. Modular device for maintenance of water quality comprising photovoltaic modules (1); battery supply system with control of charging and discharging, power supplies and control units (3); electric drive pump (5) connected with battery supply system, power supplies and control units (3); which may be connected with an aerator (6); and a floating particle filter (7); buoys (4) which may be mounted on the supporting structure, chassis (2) and a suction basket (8) placed on the target site of water intake.

2. Modular device for maintenance of water quality in accordance with claim 1, wherein all of the listed parts of the device are installed on the supporting structure (2) and create a single unit whose dimensions are adjusted to the quantity and dimensions of photovoltaic modules (1), depending on the desired function and purpose according to the user's decision.

3. Modular device for maintenance of water quality in accordance with claim 1, wherein the mentioned device is a modular floating unit that comprises at least one electric drive pump with routing valves (5) that drives the circulation of water in several possible directions, from suction basket (8) which is the initial part of the circulating water system driven by electric pump (5) which may contain an aerator (6) and a floating particle filter (7) as additional functions of the device so that the circulation of water can be directed through these additional elements.

4. Modular device for maintenance of water quality in accordance with claim 1, wherein all functions are powered by the battery supply system with batteries (3), and controlled by power supplies and control units (3) which can be programmed.

5. Modular device for maintenance of water quality in accordance with claim 1 and 4, wherein energy equipment, control units and batteries (3) are housed in a protective tanks mounted on the chassis (2) beneath the photovoltaic modules (1).

6. Modular device for maintenance of water quality in accordance with claim 1, wherein buoys (4) are mounted on the underside of the supporting structure (2).

7. Modular device for maintenance of water quality in accordance with claim 1, wherein tubes through which the water passes can be set horizontally or vertically or under certain angle, which depends on the target locations of the intake and discharge of water, position of the thermocline layer in the surrounding water, conditions on the installation site and desired function and purpose determined by to the user's preference.

8. Modular device for maintenance of water quality in accordance with claim 1, further is modular autonomous device which can be installed and used in all water bodies.
